(19) Europäisches Patentamt
European Patent Office
Office européen des brevets

(11) **EP 3 541 081 A1**

(12) **EUROPEAN PATENT APPLICATION**

(43) Date of publication:
**18.09.2019 Bulletin 2019/38**

(51) Int Cl.:
*H04N 21/44* (2011.01)    *H04L 29/06* (2006.01)
*H04N 21/45* (2011.01)    *H04N 21/462* (2011.01)
*H04N 21/845* (2011.01)

(21) Application number: **19163004.5**

(22) Date of filing: **14.03.2019**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN** | (71) Applicant: **MediaTek Inc.**<br>**Hsin-Chu 300 (TW)**<br><br>(72) Inventor: **CHAO, Hung-Yu**<br>**Hsin-Chu 300 (TW)**<br><br>(74) Representative: **Wright, Howard Hugh Burnby**<br>**Withers & Rogers LLP**<br>**4 More London Riverside**<br>**London SE1 2AU (GB)** |
| (30) Priority: **14.03.2018 TW 107108555** | |

(54) **CIRCUIT APPLIED TO DISPLAY APPARATUS AND ASSOCIATED CONTROL METHOD**

(57)    A circuit applied to a multimedia playback apparatus includes a receiving circuit, a multimedia processing circuit and a control circuit. The receiving circuit receives audiovisual data through a network. The multimedia processing circuit, coupled to the receiving circuit, processes the audiovisual data to generate multiple sets of audiovisual data to be played for the multimedia playback apparatus to play. The control circuit, coupled to the receiving circuit and the multimedia processing circuit, estimates a bandwidth of the network according to a download time of the audiovisual data, and controls, according to the bandwidth and a playback time length corresponding to a part of the audiovisual data that is received but not yet played, the receiving circuit to switch the audiovisual data subsequently received.

FIG. 1A

EP 3 541 081 A1

FIG. 1B

**Description**

This application claims the benefit of Taiwan application Serial No. 107108555, filed Mar. 14, 2018, the subject matter of which is incorporated herein by reference.

BACKGROUND OF THE INVENTION

Field of the Invention

The invention relates to a multimedia playback apparatus and an associated control method.

Description of the Related Art

In the current dynamic adaptive streaming technology, a multimedia playback apparatus can select different sources according to a bandwidth to download audiovisual data. More specifically, when a display apparatus determines that the current bandwidth is inadequate, it can switch to audiovisual data having a lower quality (e.g., a lower resolution), so as to prevent any audiovisual pause due to the inadequate bandwidth; when a display apparatus determines that the current bandwidth is sufficient, it can switch to audiovisual having a higher quality (e.g., a higher resolution) to offer better user experience. However, because it is quite difficult to accurately calculate the bandwidth of the multimedia playback apparatus, an inappropriate audiovisual data quality switching can be resulted frequently due to drastic changes in the bandwidth, thus affecting user experience.

SUMMARY OF THE INVENTION

Therefore, it is an object of the present invention to provide a method that quickly and correctly estimates a bandwidth of a display apparatus and appropriately switches the quality of downloaded audiovisual data, so as to resolve the issues of the prior art.

A circuit applied to a multimedia playback apparatus is disclosed according to an embodiment of the present invention. The circuit includes a receiving circuit, a multimedia processing circuit and a control circuit. The receiving circuit receives audiovisual data through a network. The multimedia processing data, coupled to the receiving circuit, processes the audiovisual data to generate a plurality of sets of audiovisual data to be played for the multimedia playback apparatus to play. The control circuit, coupled to the receiving circuit and the multimedia processing circuit, estimates a bandwidth of the network according to a download time of the audiovisual data, and controls, according to a playback time length corresponding to a part of the audiovisual data that is received but not yet played, the receiving circuit to switch the audiovisual data subsequently received.

A control method for a multimedia playback apparatus is disclosed according to another embodiment of the present invention. The control method includes: receiving audiovisual data through a network; processing the audiovisual data to generate a plurality of sets of audiovisual data for the multimedia playback apparatus to play; and estimating a bandwidth of the network according to a download time of the audiovisual data, and controlling, according to a playback time length corresponding to a part of the audiovisual data that is received but not yet played, a source for subsequently receiving the audiovisual data.

The step of controlling, according to the bandwidth and the total processing data amount, the download source of the audiovisual data received might comprise: when the bandwidth is smaller than an audiovisual playback speed and the total processing data amount is smaller than a threshold, changing the download source of the audiovisual data, such that the audiovisual data subsequently received has a lower quality; and when the bandwidth is smaller than the audiovisual playback speed and the total processing data amount is greater than the threshold, maintaining the download source of the audiovisual data currently received.

The step of controlling, according to the bandwidth and the total processing data amount, the download source of the audiovisual data received may comprise: when the bandwidth is greater than an audiovisual playback speed and the total processing data amount is greater than a threshold, changing the source of the audiovisual data received, such that the audiovisual data subsequently received has a higher quality; and when the bandwidth is greater than the audiovisual playback speed and the total processing data amount is smaller than the threshold, maintaining the download source of the audiovisual data currently received.

The step of processing the audiovisual data to generate the plurality of sets of audiovisual data to be played for the multimedia playback apparatus to play can comprise: identifying the audiovisual data to determine a plurality of undecoded audiovisual frames; temporarily storing the plurality of undecoded audiovisual frames; providing a decoding circuit to decode the plurality of undecoded audiovisual frames to generate a plurality of decoded audiovisual frames, and outputting the plurality of decoded audiovisual frames for the multimedia playback apparatus to play; and controlling the decoding circuit according to the decoding data amount of data currently being decoded to stop outputting the plurality of decoded audiovisual frames, wherein the decoding data amount is a total playback time length corresponding to the audiovisual data currently being processed by the decoding circuit. In this case, the control method might further comprise: determining the decoding data amount according to a presentation timestamp (PTS) of one of the plurality of undecoded audiovisual frames and the PTS of one of the plurality of decoded audiovisual frames.

In this case, the decoding data amount might comprise: determining the decoding data amount according to a difference between the PTS of the undecoded audiovisual frame most recently received by the decoding circuit and the PTS of the decoded audiovisual frame currently outputted by the decoding circuit.

The above and other aspects of the invention will become better understood with regard to the following detailed description of the preferred but non-limiting embodiments. The following description is made with reference to the accompanying drawings.

BRIEF DESCRIPTION OF THE DRAWINGS

FIG. 1A is a schematic diagram of a circuit applied to a multimedia playback apparatus according to an embodiment of the present invention;

FIG. 1B is a detailed block diagram of the circuit in FIG. 1A according to an embodiment;

FIG. 2 is a flowchart of an operation of the control circuit according to an embodiment of the present invention;

FIG. 3 is a schematic diagram of a circuit applied to a multimedia playback apparatus according to another embodiment of the present invention; and

FIG. 4 is a flowchart of an operation of a control circuit according to another embodiment of the present invention.

DETAILED DESCRIPTION OF THE INVENTION

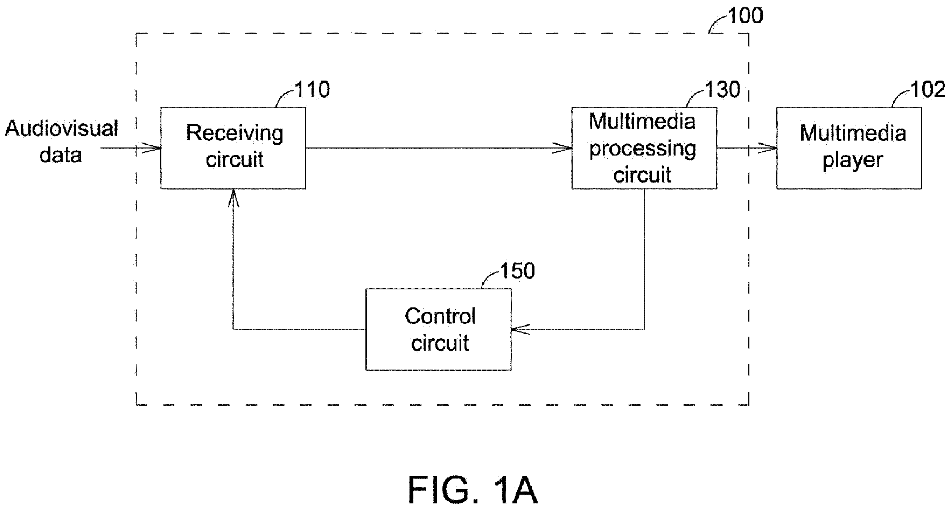

FIG. 1A shows a block diagram of a circuit 100 applied to a multimedia playback apparatus according to an embodiment of the present invention. As shown in FIG. 1A, the circuit 100 includes a receiving circuit 110, a multimedia processing circuit 130 and a control circuit 150. The circuit 100 is for downloading audiovisual data from an external source (e.g., a remote server connected through the Internet), and processing the downloaded audiovisual data to generate videos and/audios to a multimedia player 102 for playback. In this embodiment, the circuit 100 may be provided in a television set-top box, or be directly provided in the multimedia playback apparatus.

In the operation of the circuit 100, the control circuit 150 first receives audiovisual data from a predetermined download source, wherein the audiovisual data complies with the dynamic adaptive streaming technology, and the control circuit 150 controls the receiving circuit 110 on the basis of multiple segments described in multimedia metadata. The multimedia metadata is, for example, Media Presentation Description (MPD) specified in MPEG Dynamic Streaming over HTTP (MPEG-DASH), Extended M3U Playlist specified in Apple HTTP Live Streaming, Manifest specified in Adobe HTTP Dynamic Stream (HDS), or Manifest specified in Microsoft Smooth Streaming (MSS). Media Presentation Description (MPD) is given as an example in the description below, and the present invention is not limited thereto. Details of the structure and content of MPD are generally known to a person skilled in the art, and are omitted herein. The multimedia processing circuit 130 processes the audiovisual data to generate a plurality of sets of audiovisual data to be played for the multimedia player 102 to play. Further, the control circuit 150 controls, according to multiple Presentation Time Stamps (PTS) obtained by processing the multiple sets of audiovisual data, the quality of the audiovisual data subsequently received by the receiving circuit 110. Associated details are to be given shortly in the embodiments below.

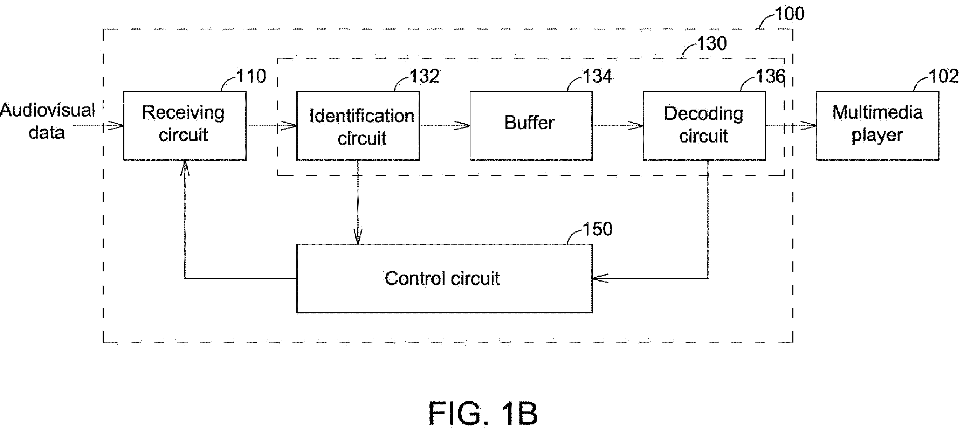

FIG. 1B shows a detailed block diagram of the circuit 100 in FIG. 1A according to an embodiment. As shown in FIG. 1B, the multimedia processing circuit 130 includes an identification circuit 132, a buffer 134 and a decoding circuit 136. The identification circuit 132 identifies the audiovisual data to determine multiple undecoded audiovisual frames, e.g., undecoded video frames or undecoded audio frames. The buffer 134 temporarily stores multiple undecoded audiovisual frames generated by the identification circuit 132. The decoding circuit 136 decodes the multiple undecoded audiovisual frames to generate multiple decoded audiovisual frames, and transmits the multiple decoded audiovisual frames to the multimedia player 102 as audiovisual data to be played. In this embodiment in FIG. 1B, the control circuit 150 controls, according to the multiple PTSs provided by the identification circuit 132 and the decoding circuit 136, the content subsequently downloaded by the receiving circuit 110. Regarding how to control the receiving circuit 110 to switch the content subsequently downloaded, one approach is to control the receiving circuit 110 to directly switch to a different download address to download content having different audiovisual data qualities, and one approach is to inform a server end providing the audiovisual data quality to provide content having a different audiovisual data quality. Because the present invention focuses on how to switch and download content having different audiovisual data qualities instead of how to obtain the audiovisual data content, the receiving circuit 110 that is controlled to directly switch to a different download address is taken as an example in the description below, and the present invention is not limited thereto.

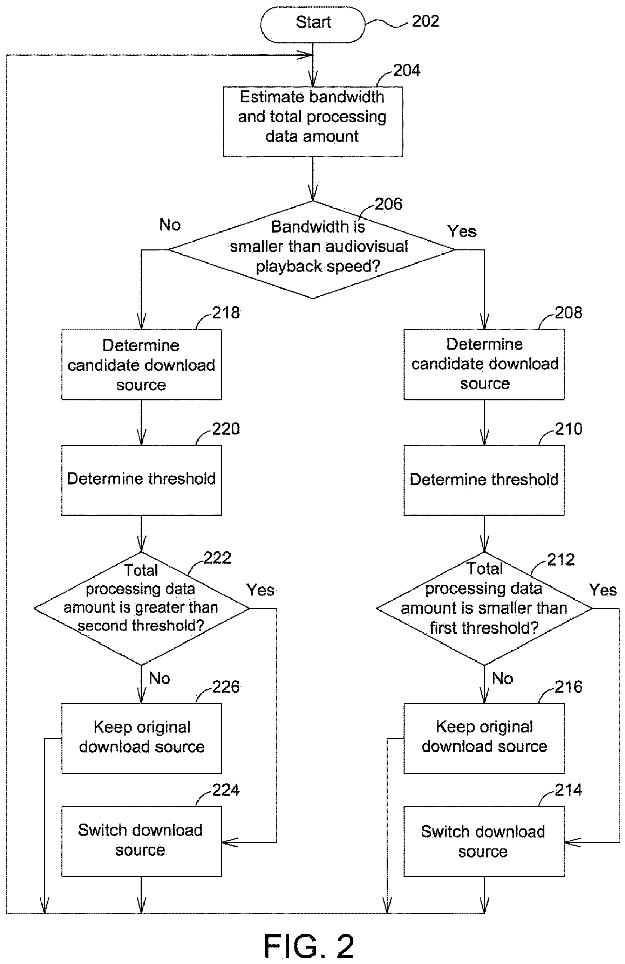

FIG. 2 shows a flowchart of an operation of the control circuit 150 according to an embodiment of the present invention. In step 202, the process begins, and the receiving circuit 110 starts to receive audiovisual data from an external download source. In step 204, the control circuit 150 estimates a bandwidth available to the circuit 100 according to a data amount and a download time of a segment in the audiovisual data. More specifically, assume that the actual playback time of the segment is defined as 3 seconds in the MPD, the data amount of the segment is 1 MB, and the receiving circuit 110 spends 6 seconds to complete the downloading. Accordingly, the control circuit 150 estimates that the current available bandwidth is (1/6) MB/s, and the bandwidth is one-half the audiovisual playback speed (i.e., (1/3) MB/s) of the segment. Further, assuming that the receiving circuit 10 spends only 1 second to complete the downloading, the control circuit 150 can estimate the current available bandwidth as 1 MB/s, and the bandwidth is three times the audiovisual playback speed ((1/3) MB/s) of the segment.

Referring to FIG. 1A, the control circuit 150 further calculates, according to the multiple PTSs currently provided by the multimedia processing circuit 130, a total processing data amount of data that is currently being processed by the multimedia processing circuit 130. More specifically, referring to FIG. 1B, the identification circuit 132, in addition to identifying the undecoded audiovisual frames currently received, further obtains a first PTS from a header of the undecoded audiovisual frame. The control circuit 150 obtains the first PTS from the identification circuit 132, obtains a second PTS of the decoded audiovisual frame currently outputted from the decoding circuit 136, wherein the second PTS is included in a header originally corresponding to the decoded audiovisual frame, and calculates a difference between the first and second PTSs to calculate the total processing data amount. In other words, the above total processing data amount substantially indicates the playback time corresponding to the audiovisual data already download from the network but not yet played. It should be noted that, in other embodiments, any indicator capable of indicating the playback time corresponding to audiovisual data already downloaded from a network but not yet played can serve as the foregoing total processing data amount.

In step 206, the control circuit 150 compares the estimated bandwidth of the circuit 100 and the audiovisual playback speed of the segment to generate a comparison result. The process enters step 208 when the comparison result indicates that the bandwidth of the circuit 100 is smaller than the audiovisual playback speed of the segment, or enters step 218 when the comparison result indicates that the bandwidth of the circuit 100 is greater than the audiovisual playback speed of the segment.

In step 208, the control circuit 150 determines a candidate download source of the next segment according to the estimated bandwidth of the circuit 100 and the MPD, wherein an audiovisual playback speed of the determined candidate download source is smaller than the bandwidth of the circuit 100. Considering the multimedia audiovisual quality, the audiovisual playback speed of the candidate download source may be selected to be smaller than that defined in the MPD but closest to the bandwidth of the circuit 100. For example, assuming that the audiovisual playback speed of the segment is 1 MB/s and the currently estimated bandwidth of the circuit 100 is 500 KB/s, the audiovisual playback speed of the candidate download source selected by the control circuit 150 may be 400 KB/s.

In step 210, the control circuit 150 determines a first threshold for subsequently determining whether the download source is to be switched. More specifically, the first threshold may be a buffer playback time, and may be generated through calculation on the playback time of a segment, the current audiovisual playback time and the audiovisual playback speed of the candidate download source. For example, the first threshold may be calculated according to the equation below:

$$TH1 = segment\_time * current\_bitrate / candidate\_bitrate$$

In the above equation, "TH1" is the first threshold, "segment_time" is the playback time of the segment, "current_bitrate" is the current audiovisual playback speed, and "candidate_bitrate" is the audiovisual playback speed of the candidate download source. Assuming that the playback time of the segment defined in the MPD is 3 seconds, the current audiovisual playback speed is 1 MB/s, and the audiovisual playback speed of the candidate download source is (0.4) MB/s, the first threshold is then 7.5 seconds. It should be noted that, the above calculation is only one example rather than a limitation to the present invention.

In step 212, the control circuit 150 determines whether the total processing data amount of the data currently being processed is smaller than the first threshold. If so, the process enters step 214 to control the receiving circuit 110 to receive the next set of audiovisual data from the candidate download source, wherein the candidate download source has a lower audiovisual playback speed (i.e., a lower resolution or a lower quality) so as to prevent an audiovisual pause from occurring at a later time. If not, the process enters step 216. In step 216, although it means that the current bandwidth is smaller than the audiovisual playback speed, because the total processing data amount is sufficient, i.e., the data amount of downloaded data is sufficient, the control circuit 150 controls the receiving circuit 110 to keep the download source from which the currently received audiovisual data is received unchanged so maintain the audiovisual quality.

In step 218, similar to step 208, the control circuit 150 determines a candidate download source of the next segment according to the estimated bandwidth of the circuit 100 and the MPD, wherein an audiovisual playback speed of the determined candidate playback speed is smaller than the bandwidth of the circuit 100. For example, the audiovisual playback speed of the candidate download source may be selected to be smaller than that defined in the MPD but closest to the bandwidth of the circuit 100. For example, assuming that the audiovisual playback speed of the segment is 1 MB/s and the currently estimated bandwidth of the circuit 100 is 2 MB/s, the audiovisual playback speed of the candidate download source selected by the control circuit 150 may be 1.8 MB/s.

In step 220, similar to step 210, the control circuit 150 determines a second threshold for subsequently determining whether the download source is to be switched. Similar to the first threshold TH1, the second threshold may be calculated according to the equation below:

$$TH2 = segment\_time * (candidate\_bitrate / current\_bitrate)$$

It should be noted that, the above calculation method is only an example rather than a limitation to the present invention.

In step 222, the control circuit 150 determines whether the total processing data amount of the data currently being processed is greater than the second threshold. If so, the process enters step 224 to control the receiving circuit 110 to receive the next set of audiovisual data from the candidate download source, wherein the candidate download source has a higher audiovisual playback speed (i.e., a higher resolution or a higher quality). If not, the process enters step 226. In step 226, although it means that the current bandwidth is greater than the audiovisual playback speed, because the total processing data amount is insufficient, i.e., the data amount of downloaded data is insufficient, the control circuit 150 controls the receiving circuit 110 to keep the download source from which the currently received audiovisual data is received unchanged so maintain the audiovisual quality.

As described in the above embodiment, the control circuit 150, in addition to the estimated bandwidth, further considers total processing data amount of data currently being processed to determine whether to switch the download source, thus achieving a more appropriate operation. For example, if the bandwidth at one instant undergoes a drastic change and is immediately restored, in contribution to the total processing data amount considered, the embodiment does not quickly and frequently switch the download source. Further, because determination is performed through the PTS of each audiovisual frame in this embodiment, the total processing data amount of data currently being processed can be more accurately estimated. In brief, one object of the present invention is to prevent audiovisual interrupt. Considering that audiovisual data having the same file size but corresponding to different qualities in fact also correspond to different playback time lengths, the embodiment adopts the PTS of audiovisual frames that have not yet been played to determine audiovisual inventory instead of the file size of audiovisual data not yet played.

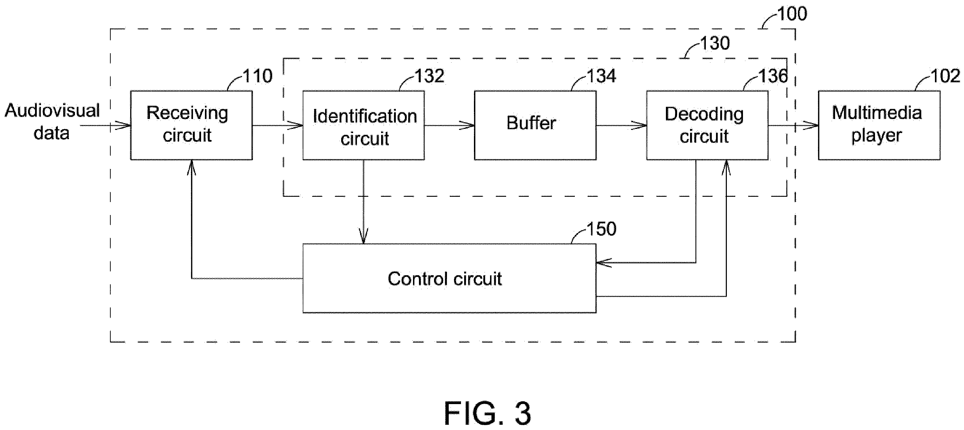

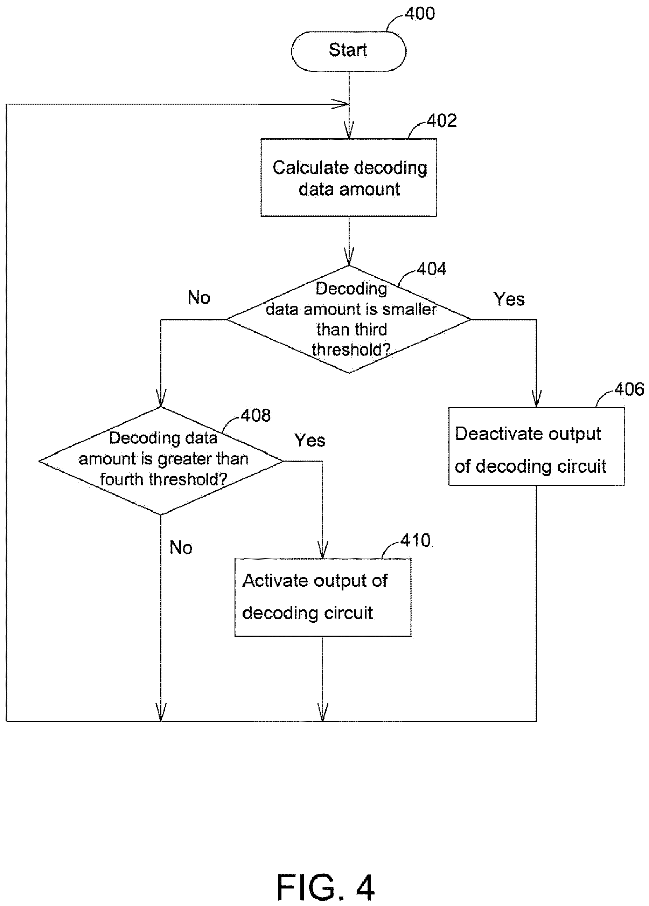

In another embodiment of the present invention, as shown in FIG. 3, the control circuit 150 may further determine to control the decoding circuit to continue or stop outputting decoded audiovisual frames according to a decoding data amount of data currently being decoded. When the decoding circuit stops outputting the decoded audiovisual frames, the control circuit 150 controls the circuit 100 to additionally provide an image prompting a user to wait to the multimedia player for display. Associated details are to be described in the embodiment in FIG. 4 shortly.

FIG. 4 shows a flowchart of an operation of the control circuit 150 according to another embodiment of the present invention. In step 400, the process begins. In step 402, the control circuit 150 calculates the decoding data amount of data currently being decoded. The decoding data amount is the total playback time corresponding to the audiovisual data currently being processed by the decoding circuit 130. For example, the control circuit 150 obtains from the decoding circuit 136 a third PTS of a most recently received undecoded audiovisual frame, wherein the third PTS is included in a header originally corresponding to the undecoded audiovisual frame. The control circuit 150 further calculates a difference between the third PTS and the foregoing second PTS to calculate the decoding data amount.

In step 404, the control circuit 150 determines whether the decoding data amount is smaller than a third threshold, wherein the third threshold may be a lower limit determined according to a somatosensory factor, e.g., 0.5 second. If the decoding data amount is smaller than the third threshold, the process enters step 406 to deactivate the output of the decoding circuit. If the decoding data amount is not smaller than the third threshold, the process enters step 408.

In step 408, the control circuit 150 determines whether the decoding data amount of the data currently being decoded is greater than a fourth threshold, wherein the fourth threshold may be a safe inventory playback time, e.g., 6 seconds. If the decoding data amount is greater than the fourth threshold, the process enters step 410 to activate the output of the decoding circuit, so as to continue to send the decoded audiovisual frames to the multimedia player for display. If not, the process returns to step 402.

In the embodiments shown in FIG. 3 and FIG. 4, because the control circuit 150 can determine the decoding data amount of the data currently being decoded according to the PTS in the audiovisual frame in the decoding circuit, whether to control the decoding circuit 136 to continue to output decoded audiovisual frames can be more accurately controlled to achieve an optimum display effect. More specifically, it is an object of the present invention to prevent audiovisual interrupt. However, there are certain time points that audiovisual frames cannot be continually played. For example, since the decoding circuit 136 needs to refer to some preceding and following audiovisual frames when decoding a specific audiovisual frame, decoding failure and thus an audiovisual interrupt can be resulted if there is an insufficient number of audiovisual frames buffered in the decoding circuit. At this point, with the foregoing embodiment, it can be accurately determined that decoding should be continued due to the insufficient number of decoding data amount, such that the output of the decoding circuit 136 can be timely deactivated and the output of the decoding circuit 136 is again activated only when the decoding data amount in the decoding circuit 136 is restored to a sufficient data amount. While the output of the decoding circuit 136 is deactivated, a text or a picture is display to prompt the user to wait for buffering, thus preventing the unexpected audiovisual interrupt from causing a user any unsatisfactory experience.

While the invention has been described by way of example and in terms of the preferred embodiments, it is to be understood that the invention is not limited thereto. On the contrary, it is intended to cover various modifications and similar arrangements and procedures, and the scope of the appended claims therefore should be accorded with the broadest interpretation so as to encompass all such modifications and similar arrangements and procedures.

**Claims**

1. A circuit applied to a multimedia playback apparatus, comprising:

   a receiving circuit, receiving audiovisual data through a network;
   a multimedia processing circuit, coupled to the receiving circuit, processing the audiovisual data to generate a plurality of sets of audiovisual data to be played for the multimedia playback apparatus to play; and
   a control circuit, coupled to the receiving circuit and the multimedia processing circuit, estimating a bandwidth of the network according to a download time of the audiovisual data, and controlling, according to a playback time length corresponding to a part of the audiovisual data that is received but not yet played, the receiving circuit to switch the audiovisual data subsequently received.

2. The circuit according to claim 1, wherein the audiovisual data complies with a dynamic adaptive streaming technology, and the control circuit estimates the bandwidth of the network according to a download time of a segment in multimedia metadata.

3. The circuit according to claim 2, wherein the control circuit compares the bandwidth with an audiovisual playback speed of the segment to generate a comparison result, and the control circuit controls, according to the comparison result and a plurality of presentation timestamps (PTSs), a download source of the audiovisual data received by the receiving circuit.

4. The circuit according to claim 1, wherein the control circuit determines, according to a plurality of presentation timestamps of the audiovisual data, a total processing data amount that is not yet played by the multimedia playback apparatus, and controls, according to the bandwidth and the total processing data amount, a source of the audiovisual data subsequently received by the receiving circuit.

5. The circuit according to claim 4, wherein the control circuit determines the total processing data amount according to a difference between a presentation time stamp (PTS) of a undecoded audiovisual frame and the PTS of a decoded audiovisual frame currently outputted to determine the total processing data amount.

6. The circuit according to claim 4, wherein the bandwidth is smaller than an audiovisual playback speed and the total processing data amount is smaller than a threshold, the control circuit changes the source of the audiovisual data such that the audiovisual data subsequently received by the receiving circuit has a lower quality; when the bandwidth is smaller than the audiovisual playback speed and the total processing data amount is greater than the threshold, the control circuit maintains the source of the audiovisual data currently received by the receiving circuit.

7. The circuit according to claim 4, wherein when the bandwidth is greater than an audiovisual playback speed and the total processing data amount is greater than a threshold, the control circuit changes the source of the audiovisual data received by the receiving circuit, such that the audiovisual data subsequently received by the receiving circuit has a higher quality; when the bandwidth is greater than the audiovisual playback speed and the total processing data amount is smaller than the threshold, the control circuit maintains the download source of the audiovisual data currently received by the receiving circuit.

8. The circuit according to claim 1, wherein the multimedia processing circuit comprises:

   an identification circuit, identifying the audiovisual data to determine a plurality of undecoded audiovisual frames; a buffer, coupled to the identification circuit, temporarily storing the plurality of undecoded audiovisual frames; and a decoding circuit, coupled to the buffer, decoding the plurality of undecoded audiovisual frames to generate a plurality of decoded audiovisual frames, and outputting the plurality of decoded audiovisual frames for the multimedia playback apparatus to play;
   wherein, the control circuit further controls the decoding circuit according to a decoding data amount of data currently being decoded to stop outputting the plurality of decoded audiovisual frames, wherein the decoding data amount is a total playback time length corresponding to the audiovisual data currently being processed by the decoding circuit.

9. The circuit according to claim 8, wherein the control circuit determines the decoding data amount according to a presentation time stamp (PTS) of one of the plurality of undecoded audiovisual frames and the PTS of one of the plurality of decoded audiovisual frames.

10. The circuit according to claim 9, wherein the control circuit determines the decoding data amount according to a difference between the PTS of the undecoded audiovisual frame most recently received by the decoding circuit and the PTS of the decoded audiovisual frame currently outputted by the decoding circuit.

11. A control method for a multimedia playback apparatus, comprising:

   receiving audiovisual data through a network;
   processing the audiovisual data to generate a plurality of sets of audiovisual data to be played for the multimedia playback apparatus to play; and
   estimating a bandwidth of the network according to a download time of the audiovisual data, and controlling, according to a playback time length corresponding to a part of the audiovisual data that is received but not yet played, switching of the audiovisual data subsequently received.

12. The control method according to claim 11, wherein the audiovisual data complies with a dynamic adaptive streaming technology, and the step of estimating the bandwidth of the network comprises estimating the bandwidth of the network according to a download time of a segment in multimedia metadata.

13. The control method according to claim 12, wherein the step of controlling the download source of the audiovisual data received comprises:

   comparing the bandwidth with an audiovisual playback speed of the segment to generate a comparison result; and
   controlling the download source of the received audiovisual data according to the comparison result and a presentation time stamp (PTS) of the audiovisual data.

14. The control method according to claim 11, wherein the step of controlling the download source of the audiovisual data received comprises:

   determining, according to a plurality of presentation timestamps of the audiovisual data, a total processing data amount that is not yet played by the multimedia playback apparatus; and
   controlling, according to the bandwidth and the total processing data amount, a source for subsequently receiving the audiovisual data.

15. The control method according to claim 14, wherein the step of determining the total processing data comprises:
   determining a difference between a presentation timestamp (PTS) of a undecoded audiovisual frame and the PTS of a decoded audiovisual frame currently outputted to determine the total processing data amount.

FIG. 1A

EP 3 541 081 A1

FIG. 1B

FIG. 2

FIG. 3

EP 3 541 081 A1

FIG. 4

Europäisches
Patentamt

European
Patent Office

Office européen
des brevets

# EUROPEAN SEARCH REPORT

Application Number

EP 19 16 3004

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/227080 A1 (GAO QIANG [US] ET AL) 29 August 2013 (2013-08-29)<br>* paragraph [0006] - paragraph [0007] *<br>* paragraph [0054] - paragraph [0058] *<br>* paragraph [0064] - paragraph [0068] *<br>* paragraph [0085] - paragraph [0089] *<br>* paragraph [0099] - paragraph [0122] *<br>----- | 1-15 | INV.<br>H04N21/44<br>H04L29/06<br>H04N21/45<br>H04N21/462<br>H04N21/845 |
| A | LI ZHI ET AL: "Probe and Adapt: Rate Adaptation for HTTP Video Streaming At Scale",<br>IEEE JOURNAL ON SELECTED AREAS IN COMMUNICATIONS, IEEE SERVICE CENTER, PISCATAWAY, US,<br>vol. 32, no. 4, 1 April 2014 (2014-04-01), pages 719-733, XP011543312,<br>ISSN: 0733-8716, DOI: 10.1109/JSAC.2014.140405<br>[retrieved on 2014-03-17]<br>* page 719 - page 726 *<br>----- | 1-15 | |
| A | US 2018/020031 A1 (CHANG WEI-CHUNG [TW]) 18 January 2018 (2018-01-18)<br>* paragraph [0003] - paragraph [0020] *<br>* paragraph [0050] - paragraph [0056] *<br>* paragraph [0061] - paragraph [0069] *<br>----- | 1-15 | TECHNICAL FIELDS SEARCHED (IPC)<br><br>H04N<br>H04L |

The present search report has been drawn up for all claims

| Place of search | Date of completion of the search | Examiner |
|---|---|---|
| The Hague | 17 May 2019 | Lefol, Damien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 19 16 3004

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2019

| Patent document cited in search report | | | Publication date | Patent family member(s) | | | Publication date |
|---|---|---|---|---|---|---|---|
| US 2013227080 | | A1 | 29-08-2013 | CN | 104205769 | A | 10-12-2014 |
| | | | | CN | 104205770 | A | 10-12-2014 |
| | | | | CN | 104205772 | A | 10-12-2014 |
| | | | | EP | 2820819 | A1 | 07-01-2015 |
| | | | | EP | 2820820 | A1 | 07-01-2015 |
| | | | | EP | 2820823 | A1 | 07-01-2015 |
| | | | | JP | 6054427 | B2 | 27-12-2016 |
| | | | | JP | 6271445 | B2 | 31-01-2018 |
| | | | | JP | 2015511783 | A | 20-04-2015 |
| | | | | JP | 2015511784 | A | 20-04-2015 |
| | | | | JP | 2015513840 | A | 14-05-2015 |
| | | | | KR | 20140130210 | A | 07-11-2014 |
| | | | | KR | 20140130211 | A | 07-11-2014 |
| | | | | KR | 20140138784 | A | 04-12-2014 |
| | | | | US | 2013227080 | A1 | 29-08-2013 |
| | | | | US | 2013227081 | A1 | 29-08-2013 |
| | | | | US | 2013227122 | A1 | 29-08-2013 |
| | | | | WO | 2013130474 | A1 | 06-09-2013 |
| | | | | WO | 2013130475 | A1 | 06-09-2013 |
| | | | | WO | 2013130477 | A1 | 06-09-2013 |
| US 2018020031 | | A1 | 18-01-2018 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW 107108555